# EUROPÄISCHE PATENTSCHRIFT

(11) **EP 2 818 922 B1**
(45) Veröffentlichungstag und Bekanntmachung des Hinweises auf die Patenterteilung: **11.05.2016**
(21) Anmeldenummer: 13174138.1
(22) Anmeldetag: 27.06.2013
(51) Int. Cl.: G03B 17/02, G03B 17/08, G03B 17/55, G08G 1/017

(54) **Verkehrsüberwachungsgerät**
Traffic monitoring device
Appareil de surveillance du trafic

(43) Veröffentlichungstag der Anmeldung: 31.12.2014
(73) Patentinhaber: VITRONIC Dr.-Ing. Stein Bildverarbeitungssysteme GmbH, 65189 Wiesbaden (DE)
(72) Erfinder: Hoffmann, Burghard, 65232 Taunusstein (DE); Bobak, Reiner, 65510 Hünstetten (DE)
(74) Vertreter: Müller, Thomas Michael

(56) Entgegenhaltungen:
- DE-C1- 4 400 475
- US-A- 4 414 576
- US-A- 5 864 365
- US-A1- 2004 139 812
- US-A1- 2006 115 265

## Beschreibung

Die Erfindung betrifft ein Verkehrsüberwachungsgerät mit einem Gehäuse, in dem die erforderlichen elektronischen Geräte für die Verkehrsüberwachung, wie Geräte zur Ermittlung der Geschwindigkeit von Fahrzeugen und Kameras, untergebracht sind.

Allgemein bekannt sind hierbei sowohl stationäre als auch mobile Verkehrsüberwachungsgeräte, welche ein quaderförmiges Gehäuse aufweisen. Dies weist in aller Regel einen Rahmen auf, an dem Bleche befestigt sind, so dass ein Gehäuseinnenraum von den Blechen umschlossen ist. Bei anderen Varianten handelt es sich um miteinander verschweißte und teilweise auch gekantete Blechelemente. Diese Konstruktionen haben jedoch den Nachteil, dass sie bezüglich ihrer Herstellung und Montage aufwendig sind.

Aufgabe der vorliegenden Erfindung ist es, ein Verkehrsüberwachungsgerät mit einem einfach aufgebauten Gehäuse bereitzustellen.

Die Aufgabe wird durch ein Verkehrsüberwachungsgerät mit einem Gehäuse gelöst, wobei das Gehäuse mehrere parallel zu einer Hochachse ausgerichtete Längsprofile aufweist, die über den Umfang angeordnet sind und einen Gehäuseinnenraum umschließen, wobei zumindest eines der Längsprofile eine eine Außenfläche bildende Außenwand und eine eine Innenfläche bildende Innenwand aufweist.

Die Gestaltung mindestens eines Längsprofils derart, dass die Außenfläche und die Innenfläche von unterschiedlichen Elementen des Längsprofils gebildet werden, nämlich der Außenwand und der Innenwand, hat den Vorteil, dass die Außenfläche unabhängig von den funktionalen Erfordernissen der Innenfläche gestaltet werden kann. An der Innenfläche können die erforderlichen elektronischen Geräte montiert werden. Hierbei sind besondere Formen und Anpassungen der Innenfläche erforderlich, um ein einfaches Montieren der Geräte zu gewährleisten. Es kann jedoch erwünscht sein, die Außenfläche unabhängig von dieser funktionalen Vorgabe zu gestalten. Dies wird dadurch erzielt, dass die Außenwand nicht die Innenfläche bildet und somit frei gestaltet werden kann. Ein weiterer Vorteil besteht darin, dass bei diesem doppelwandigen Aufbau eine höhere Stabilität des Längsprofils zur Folge hat, so dass eine selbsttragende Konstruktion, welche keine Rahmenkonstruktion erfordert, realisierbar ist. Alleine durch die Montage der einzelnen Längsprofile miteinander kann bereits die erforderliche Stabilität erzielt werden. Ein weiterer vorteilhafter Aspekt ist, dass bei Sonneneinstrahlung diese auf die Außenwand trifft und nur die Außenwand unmittelbar erhitzt. Aufgrund der Innenwand wird diese Strahlungswärme nicht unmittelbar an das Gehäuseinnere weitergeleitet. Ferner bietet die separate Außenwand die Möglichkeit, besondere Vorkehrungen gegen Vandalismus bereitzustellen, wobei alleine schon das Vorsehen einer Außenwand dazu führt, dass bei einer Beschädigung der Außenwand das Gehäuseinnere noch geschützt ist.

Vorteilhafterweise sind alle Längsprofile des Gehäuses bezüglich ihres Querschnittprofils identisch aufgebaut. Hierdurch lässt sich die Teilevielfalt zur Herstellung des Gehäuses deutlich reduzieren. Die einzelnen identischen Längsprofile können dann noch nachträglich bearbeitet werden, um unterschiedliche Funktionen, wie z.B. Öffnungen für Kameras und Sensoren oder Kühlkanäle, unter zu bringen.

Zur einfachen Montage elektronischer Geräte weist die Innenfläche der Innenwand des zumindest einen Längsprofils eine zum Gehäuseinnenraum weisende Planfläche auf. An diese Planfläche lassen sich übliche elektronische Geräte, wie beispielsweise Kameras, Rechnereinheiten oder ähnliches, einfach montieren. Grundsätzlich kann die gesamte Innenfläche als Planfläche gestaltet sein.

Das zumindest eine Längsprofil kann als Hohlprofil gestaltet sein. Hierdurch ergibt sich eine sehr stabile Grundform, die zudem thermische Vorteile bei direkter Sonneneinstrahlung bietet. Vorteilhafterweise sind die Längsprofile stranggepresst oder extrudiert, so dass sich eine besonders günstige Herstellung der Längsprofile bietet.

Das zumindest eine Längsprofil kann mindestens einen Kühlkanal zum Leiten eines Kühlmediums, vorzugsweise Luft, aufweisen. Der Kühlkanal ist vorzugsweise unmittelbar zwischen der Innenwand und der Außenwand gebildet, wobei die Innenwand und die Außenwand den Kühlkanal begrenzen. Besonders vorteilhaft ist hier die Ausgestaltung des Längsprofils als Hohlprofil, so dass zur Ausbildung des Kühlkanals keine weiteren separaten Wände vorgesehen werden müssen.

Zwischen der Außenwand und der Innenwand können zwei Kühlkanäle gebildet sein, wobei die beiden Kühlkanäle durch eine Trennwand voneinander getrennt sind. Die Trennwand weist hierbei vorzugsweise die Oberfläche vergrößernde Strukturen, wie beispielsweise Rippen, auf, die den Wärmeaustausch zwischen den beiden Kühlkanälen fördern. Die Trennwand kann integraler Bestandteil des Längsprofils sein oder als separates Bauteil ausgebildet sein, das in das Längsprofil zwischen die Außenwand und die Innenwand eingeschoben ist und abdichtend mit dem Längsprofil verbunden ist.

Die Längsprofile sind vorzugsweise lösbar miteinander verbunden, um eine einfache Montage und Demontage vor Ort zu gewährleisten. Vorzugsweise ist vorgesehen, dass die Außenflächen der Längsprofile zusammen eine in Umfangsrichtung geschlossene Außenfläche des Gehäuses bilden, wobei die einzelnen Außenflächen der Längsprofile einen stetigen Übergang zueinander aufweisen, also ohne signifikante Kante oder Ecke zueinander übergehen.

Es kann vorgesehen sein, dass das Gehäuse gegen das Eindringen von Fremdkörpern, Staub und/oder Flüssigkeit, insbesondere Wasser, geschützt ist, um zum Beispiel eine Schutz gemäß DIN EN 60529 zu erzielen. Hierzu ist das Gehäuse vollständig nach außen hin abgekapselt und abgedichtet. Somit müssen die einzelnen erforderlichen elektronischen Geräte selbst nicht gekapselt sein und müssen selbst nicht einen Schutz nach DIN EN 60529 aufweisen.

Um dies zu erzielen, können Dichtungen zwischen den einzelnen Längsprofilen angeordnet sein. Die Längsprofile weisen hierbei parallel zur Hochachse verlaufende

Außenkanten auf, mit denen jeweils zwei benachbarte Längsprofile aneinander stoßen, wobei zwischen den Längskanten zweier benachbarter Längsprofile Dichtungen vorgesehen sind, um den Gehäuseinnenraum nach außen hin abzudichten.

Um die Zugänglichkeit zum Gehäuseinnenraum zu gewährleisten, kann eines der Längsprofile über Scharniere mit einem benachbarten der Längsprofile verbunden sein. Somit dient das gesamte Längsprofil als Tür.

Der Gehäuseinnenraum des Gehäuses dient zur Aufnahme von elektronischen Geräten zur Verkehrsüberwachung. Hierbei kann zumindest eines der Längsprofile zumindest eine Öffnung für eine Kamera, ein LIDAR-System, Sensoren bzw. Beleuchtungseinheiten zur Verkehrsüberwachung aufweisen.

Ein bevorzugtes Ausführungsbeispiel wird im folgenden anhand der Zeichnungen näher erläutert.

Hierin zeigt:
- Figur 1: eine Frontansicht eines Verkehrsüberwachungsgerätes,
- Figur 2: eine Rückansicht des Verkehrsüberwachungsgerätes gemäß Figur 1,
- Figur 3: einen Längsschnitt durch ein Verkehrsüberwachungsgerät gemäß Figur 1 entlang der Schnittlinie III-III in Figur 5,
- Figur 4: einen Längsschnitt durch ein Verkehrsüberwachungsgerät gemäß Figur 1 entlang der Schnittlinie IV-IV in Figur 5 und
- Figur 5: einen Querschnitt durch Verkehrsüberwachungsgerät gemäß Figur 1 entlang der Schnittlinie V-V in Figur 1.

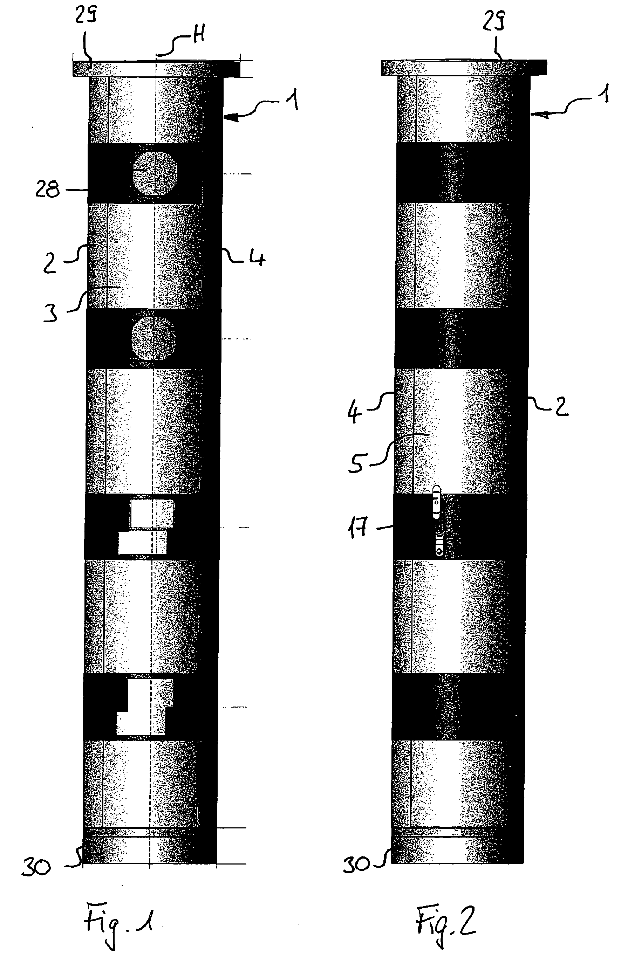

Die Figuren 1 bis 5 zeigen dasselbe Verkehrsüberwachungsgerät in verschiedenen Ansichten und werden im folgenden zusammen beschrieben.

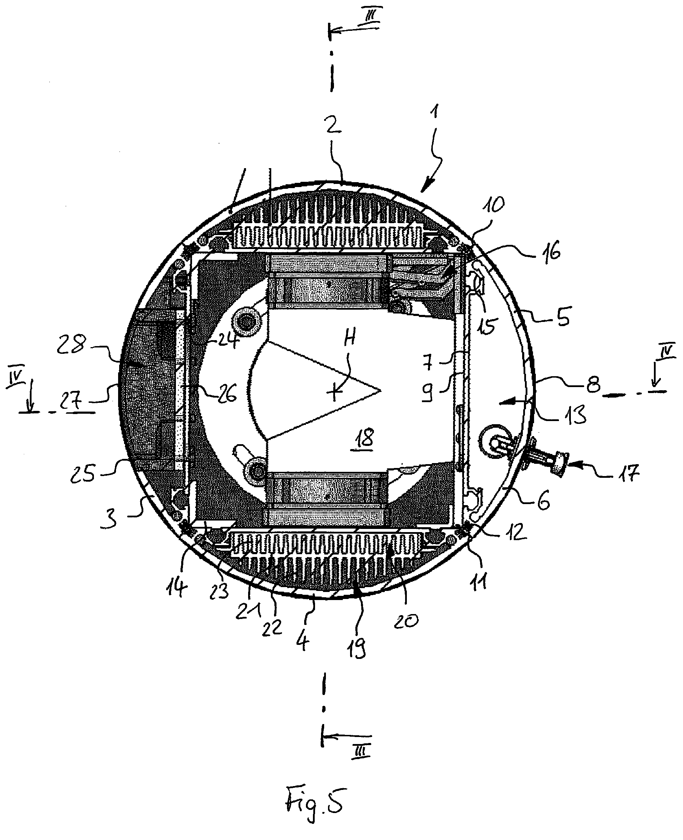

Das Verkehrsüberwachungsgerät weist ein Gehäuse 1 auf, welches im wesentlichen aus vier Längsprofilen 2, 3, 4, 5 aufgebaut ist. Die Längsprofile 2, 3, 4, 5 sind parallel zu einer Hochachse H des Gehäuses 1 angeordnet und um die Hochachse H derart angeordnet, dass sich im Querschnitt betrachtet ein geschlossenes Gehäuse 1 ergibt, welches einen Gehäuseinnenraum 18 bildet. Das Querschnittsprofil aller Längsprofile 2, 3, 4, 5 ist identisch, wobei im folgenden das Längsprofil mit dem Bezugszeichen 5 exemplarisch für alle Längsprofile 2, 3, 4, 5 beschrieben wird. Das Längsprofil 5 ist als Hohlprofil gestaltet und weist eine Außenwand 6 und eine Innenwand 7 auf. Prinzipiell muss das Längsprofil 5 nicht als Hohlprofil gestaltet sein, solange es eine Innenwand und eine Außenwand aufweist. Die Außenwand 6 weist eine nach außen weisende Außenfläche 8 und die Innenwand 7 eine nach innen weisende Innenfläche 9 auf. Alle Außenwände 8 der vier Längsprofile 2, 3, 4, 5 bilden zusammen die Außenfläche des Gehäuses 1. Alle Innenflächen 9 der Profile 2, 3, 4, 5 bilden zusammen die Innenfläche des Gehäuseinnenraums 18. Das Querschnittsprofil (Figur 5) des Längsprofils 5 weist die Form eines Kreissegments auf, wobei die Außenwand 6 entlang eines Kreisbogens verläuft und die Innenwand 7 entlang einer Kreissehne, wobei die Außenwand 6 zur Hochachse H zentriert angeordnet ist. Somit bilden alle Außenwände 6 der Längsprofile 2, 3, 4, 5 eine gemeinsame Außenwand bzw. im Querschnitt kreisförmige Außenfläche des Gehäuses 1. Grundsätzlich kann die Außenwand 6 beliebig gestaltet sein. Die kreisbogenförmige Gestaltung hat jedoch den Vorteil, dass alle Längsprofile 2, 3, 4, 5 im Querschnitt betrachtet ein identisches Profil aufweisen können.

Die Innenwand 7 verläuft entlang einer Kreissehne und ist eben gestaltet, so dass die Innenfläche 9 insgesamt die Form einer Planfläche aufweist. Somit ergibt sich ein Gehäuseinnenraum 18 mit einem quadratischen Querschnitt. Die Außenwand 6 und die Innenwand 7 stoßen an zwei Längskanten 10, 11 aneinander. Jeweils zwei benachbarte Längsprofile 2, 3, 4, 5 stoßen mit ihren Längskanten 10, 11 aneinander, wobei zwischen zwei benachbarten bzw. aneinanderstoßenden Längskanten eine Dichtung 12 in Form eines Dichtungsstreifens vorgesehen ist. Somit sind die Längsprofile 2, 3, 4, 5 gegeneinander abgedichtet und der Gehäuseinnenraum 18 nach außen hin abgedichtet.

Aufgrund des quadratischen Querschnitts des Gehäuseinnenraums 18 können an die Innenwände 7 beliebige Bauteile montiert werden. Zur Verbindung der einzelnen benachbarten Längsprofile 2, 3, 4, 5 miteinander sind Verbindungswinkel 14 vorgesehen. In die Innenwände 7 sind Befestigungsnuten 15 parallel zur Hochachse H eingebracht, die einen Hinterschnitt bilden bzw. in Form einer Schwalbenschwanzführung ausgebildet sind. In diese Nuten können Gewindestücke (nicht dargestellt) mit Innengewinden eingeschoben werden, so dass Schrauben durch Bohrungen der Verbindungswinkel 14 in die Gewindestücke eingeschraubt werden können, um die Verbindungswinkel 14 mit den Längsprofilen 2, 3, 4, 5 zu verbinden und somit über Eck jeweils zwei benachbarte Längsprofile 2, 3, 4, 5 miteinander zu verbinden. Die Befestigungsnuten 15 können ferner dazu dienen, elektronische Geräte für das Verkehrsüberwachungsgerät an den Innenwänden 7 zu befestigen. Ferner sind an einem der Längsprofile, nämlich dem Längsprofil mit dem Bezugszeichen 5, an einer der Befestigungsnuten 15 Scharniere 16 befestigt, die ferner an einem benachbarten Längsprofil 2 befestigt sind, so dass das gesamte Längsprofil mit dem Bezugszeichen 5 als Tür fungieren kann. Hierzu ist in die Außenwand 6 ein Türgriff 17 eingebracht.

Die Längsprofile 2, 3, 4, 5 dienen darüber hinaus der Kühlung des Gehäuseinnenraums 18. Hierzu ist das Längsprofil 5, welches auch als Tür dient, wie bereits erwähnt als Hohlprofil gestaltet und bildet somit zwischen der Außenwand 6 und der Innenwand 7 einen Kühlkanal 13, durch den ein Kühlmedium, hier Luft, geführt werden kann. Die an das Längsprofil mit dem Bezugszeichen 5 angrenzenden Längsprofile mit den Bezugszeichen 2 und 4 sind, wie ebenfalls schon gesagt, identisch zu dem Längsprofil 5 gestaltet. Diese Längsprofile 2, 4 sind jedoch in einen äußeren Kühlkanal 19 und einen inneren Kühlkanal 20 aufgeteilt. Hierzu ist eine Trennwand 21 in das Innere der Längsprofile 2, 4 eingeschoben und parallel zu den Längskanten der jeweiligen Längsprofile 2, 4 abgedichtet befestigt. Im gezeigten Ausführungsbeispiel ist die Trennwand 21 auf der Rückseite der die Befestigungsnuten 15 bildenden Wandabschnitte mit den Längsprofilen 2, 4 verbunden. Somit ergibt sich der äußere Kühlkanal 19 zwischen der Trennwand 21 und der Außenwand 6. Der innere Kühlkanal 20 ist zwischen der Trennwand 21 und der Innenwand 7 gebildet. In dem äußeren Kühlkanal 19 wird, wie nachfolgend noch näher erläutert wird, Umgebungsluft geleitet. In dem inneren Kühlkanal 20 strömt Luft aus dem Gehäuseinnenraum 18, wobei die beiden Kühlsysteme des äußeren Kühlkanals 19 und des inneren Kühlkanals 20 voneinander abgedichtet sind. Zur Verbesserung des Wärmeaustauschs zwischen den beiden Kühlkanälen 19, 20 weist die Trennwand äußere Rippen 22 im äußeren Kühlkanal 19 und innere Rippen 23 im inneren Kühlkanal 20 auf, durch welche die Oberfläche der Trennwand 21 vergrößert wird, um einen Wärmeübergang zwischen den beiden Kühlkanälen 19, 20 zu fördern.

Ein vorderes Längsprofil mit dem Bezugszeichen 3 ist mit Öffnungen für Kameras, LIDAR-Systeme ("Light Detection and Ranging"-System unter Verwendung eines Lasers) oder weiteren Sensoren versehen. Hierzu sind in der Innenwand 7 Öffnungen 24 und in der Außenwand 6 Öffnungen 25 vorgesehen, in denen transparente Bauelemente 28 mit transparenten Scheiben 26, 27 vorgesehen sind. Die transparenten Bauelemente 28 sind abgedichtet in die Öffnungen 24, 25 eingesetzt.

Durch die abgedichtete Verbindung der Längsprofile 2, 3, 4, 5 miteinander und das abgedichtete Einsetzen der transparenten Bauteile 28 ist gewährleistet, dass der Gehäuseinnenraum 18 gegen das Eindringen von Fremdkörpern, Staub und/oder Flüssigkeit, geschützt ist, so dass die elektronischen Bauteile, die in dem Gehäuseinnenraum 18 aufgenommen werden, selber nicht gekapselt sein müssen.

Das Gehäuse 11 ist oben durch einen Deckel 29 abgeschlossen und unten durch ein Fundament 30 abgeschlossen.

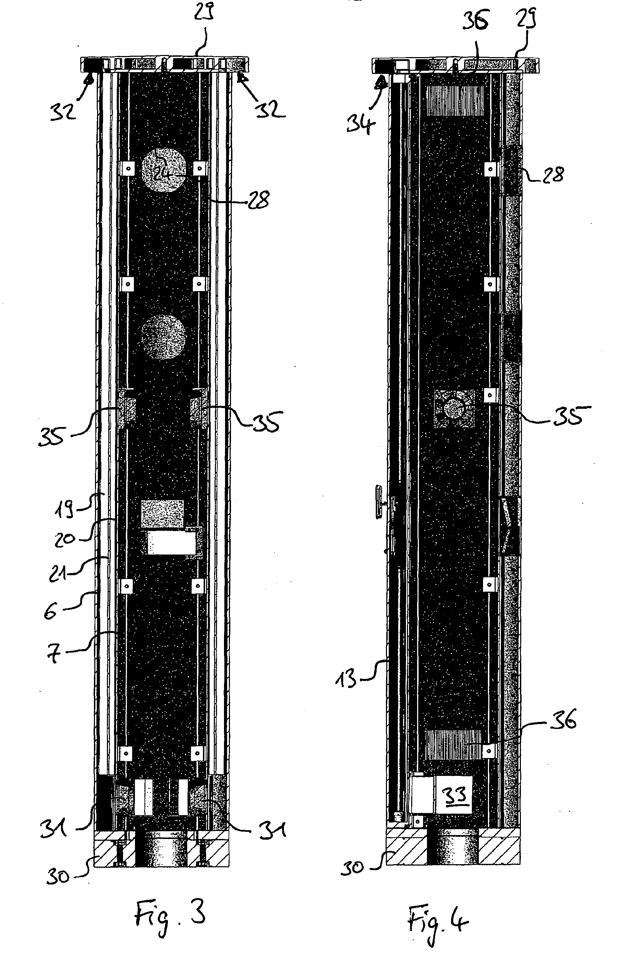

Aus den Figuren 3 und 4 gehen die Kühlkreisläufe hervor. Figur 3 zeigt die inneren und äußeren Kühlkanäle 19, 20 im Längsschnitt. Der äußere Kühlkanal 19 der beiden Längsprofile 2, 4 ist am oberen Ende der Längsprofile 2, 4 mit einer Lufteinlassöffnung im Deckel 29 verbunden. Die inneren Kühlkanäle 20 sind am oberen Ende durch den Deckel 29 verschlossen. Am unteren Ende der Längsprofile 2, 4 ist erkennbar, dass die Trennwand 21 vor dem unteren Ende der Längsprofile 2, 4 endet und die inneren Kühlkanäle 20 nach unten hin abgeschlossen sind. Die äußeren Kühlkanäle 19 verlaufen weiter nach unten, wobei in diesem Bereich in den Innenwänden 7 der Profile 2, 4 jeweils ein Gebläse 31 vorgesehen ist. Mittels der Gebläse 31 wird Luft durch die Einlassöffnungen 32 angesaut, vertikal entlang der äußeren Kühlkanäle 19 nach unten geleitet und dann durch die Gebläse 31 durch Verbindungskanäle 33 in den Kühlkanal 13 des Längsprofils mit dem Bezugszeichen 5, welches auch als Tür dient, geleitet. Durch den Kühlkanal 13 des Längsprofils 5 wird die Luft nach oben gefördert und durch eine Auslassöffnung des Deckels 29 ausgeblasen. Hierbei ist sichergestellt, dass die angesaugte Außenluft nicht in das Innere des Gehäuseinnenraums 18 gelangt.

Etwa im mittleren Bereich der Profile 2, 4 ist in den Innenwänden jeweils ein Gebläse 35 vorgesehen, welche Luft aus dem Gehäuseinnenraum 18 ansaugen und in die inneren Kühlkanäle 20 der Profile 2, 4 leiten. Die Luft wird dann nach oben und nach unten transportiert und wird durch Austrittsöffnungen 36 am oberen und am unteren Ende der Profile 2, 4 wieder zurück in den Gehäuseinnenraum 18 geblasen.

Über die Trennwände 21 findet ein Wärmeaustausch zwischen der angesaugten Umgebungsluft und der zirkulierenden Innenluft des Gehäuseinnenraums 18 statt, so dass die von den elektronischen Geräten innerhalb des Gehäuseinnenraums 18 erzeugte Wärme nach außen abgegeben werden kann. Hierbei ist eine vollständige Trennung der Luftkreisläufe gewährleistet, so dass kein Staub oder ähnliches in den Gehäuseinnenraum 18 eindringen kann.

### Bezugszeichenliste

- 1: Gehäuse
- 2: Längsprofil
- 3: Längsprofil
- 4: Längsprofil
- 5: Längsprofil
- 6: Außenwand
- 7: Innenwand
- 8: Außenfläche
- 9: Innenfläche
- 10: Längskante
- 11: Längskante
- 12: Dichtung
- 13: Kühlkanal
- 14: Verbindungswinkel
- 15: Befestigungsnut
- 16: Scharnier
- 17: Türgriff
- 18: Gehäuseinnenraum
- 19: äußerer Kühlkanal
- 20: innerer Kühlkanal
- 21: Trennwand
- 22: äußere Rippen
- 23: innere Rippen
- 24: Öffnung
- 25: Öffnung
- 26: Scheibe
- 27: Scheibe
- 28: transparentes Bauelement
- 29: Deckel
- 30: Fundament
- 31: Gebläse
- 32: Einlassöffnung
- 33: Verbindungskanal
- 34: Auslassöffnung
- 35: Gebläse
- 36: Austrittsöffnung

- H: Hochachse

## Patentansprüche

1. Verkehrsüberwachungsgerät mit einem Gehäuse (1), welches mehrere parallel zu einer Hochachse (H) ausgerichtete Längsprofile (2, 3, 4, 5) aufweist, die über den Umfang angeordnet sind und einen Gehäuseinnenraum (18) umschließen, wobei zumindest eines der Längsprofile (2, 3, 4, 5) eine Außenwand (6) aufweist, die eine Außenfläche (8) bildet, und eine Innenwand (7) aufweist, die eine zum Gehäuseinnenraum (18) weisende Innenfläche (9) bildet.

2. Verkehrsüberwachungsgerät nach Anspruch 1,
**dadurch gekennzeichnet,**
**dass** die Innenfläche (9) der Innenwand (7) des zumindest einen Längsprofils (2, 3, 4, 5) eine zum Gehäuseinnenraum (18) weisende Planfläche aufweist.

3. Verkehrsüberwachungsgerät nach einem der vorangehenden Ansprüche,
**dadurch gekennzeichnet,**
**dass** das zumindest eine Längsprofil (2, 3, 4, 5) ein Hohlprofil ist.

4. Verkehrsüberwachungsgerät nach einem der vorangehenden Ansprüche,
**dadurch gekennzeichnet,**
**dass** die Längsprofile (2, 3, 4, 5) stranggepresst oder extrudiert sind.

5. Verkehrsüberwachungsgerät nach einem der vorangehenden Ansprüche,
**dadurch gekennzeichnet,**
**dass** zumindest eines der Längsprofile (2, 4, 5) zumindest einen Kühlkanal (13, 19, 20) zum Leiten eines Kühlmediums aufweist.

6. Verkehrsüberwachungsgerät nach Anspruch 5,
**dadurch gekennzeichnet,**
**dass** zwischen der Innenwand (7) und der Außenwand (6) des zumindest einen Längsprofils (2, 4, 5) der zumindest eine Kühlkanal (13, 19, 20) gebildet ist.

7. Verkehrsüberwachungsgerät nach Anspruch 6,
**dadurch gekennzeichnet,**
**dass** zwischen der Außenwand (6) und der Innenwand (7) zwei Kühlkanäle (19, 20) gebildet sind, die durch eine Trennwand (21) voneinander getrennt sind.

8. Verkehrsüberwachungsgerät nach Anspruch 7,
**dadurch gekennzeichnet,**
**dass** die Trennwand (21) die Oberfläche vergrößernde Strukturen, insbesondere Rippen (22, 23), aufweist, die den Wärmeaustausch zwischen den beiden Kühlkanälen (19, 20) fördern.

9. Verkehrsüberwachungsgerät nach Anspruch 8,
**dadurch gekennzeichnet,**
**dass** die Trennwand (21) als separates Bauteil ausgebildet ist und in das Längsprofil (2, 4) zwischen die Außenwand (6) und die Innenwand (7) eingeschoben ist.

10. Verkehrsüberwachungsgerät nach einem der vorangehenden Ansprüche,
**dadurch gekennzeichnet,**
**dass** das Gehäuse (1) gegen das Eindringen von Fremdkörpern, Staub und/oder Flüssigkeit geschützt ist.

11. Verkehrsüberwachungsgerät nach einem der vorangehenden Ansprüche,
**dadurch gekennzeichnet,**
**dass** die Längsprofile (2, 3, 4, 5) lösbar miteinander verbunden sind.

12. Verkehrsüberwachungsgerät nach einem der vorangehenden Ansprüche,
**dadurch gekennzeichnet,**
**dass** die Außenflächen (8) der Längsprofile (2, 3, 4, 5) zusammen eine in Umfangsrichtung geschlossene Außenfläche des Gehäuses (1) bilden, wobei die einzelnen Außenflächen (8) der Längsprofile (2, 3, 4, 5) einen stetigen Übergang zueinander aufweisen.

13. Verkehrsüberwachungsgerät nach einem der vorangehenden Ansprüche,
**dadurch gekennzeichnet,**
**dass** die Längsprofile (2, 3, 4, 5) parallel zur Hochachse (H) verlaufende Außenkanten (10, 11) aufweisen, mit denen jeweils zwei benachbarte Längsprofile (2, 3, 4, 5) aneinanderstoßen, wobei zwischen den Längskanten (10, 11) zweier benachbarter Längsprofile (2, 3, 4, 5) Dichtungen vorgesehen sind, um den Gehäuseinnenraum (18) nach außen hin abzudichten.

14. Verkehrsüberwachungsgerät nach einem der vorangehenden Ansprüche,
**dadurch gekennzeichnet,**
**dass** eines der Längsprofile (5) über Scharniere (16) mit einem benachbarten der Längsprofile (2) verbunden ist.

15. Verkehrsüberwachungsgerät nach einem der vorangehenden Ansprüche,
**dadurch gekennzeichnet,**
**dass** das durch die Längsprofile (2, 3, 4, 5) gebildete Gehäuse (1) selbsttragend ist.

16. Verkehrsüberwachungsgerät nach einem der vorangehenden Ansprüche,
**dadurch gekennzeichnet,**
**dass** in dem Gehäuseinnenraum (18) des Gehäuses (1) elektronische Geräte zur Verkehrsüberwachung aufgenommen sind.

17. Verkehrsüberwachungsgerät nach einem der vorangehenden Ansprüche,
**dadurch gekennzeichnet,**
**dass** zumindest eines der Längsprofile (2, 3, 4, 5) zumindest eine Öffnung (24, 25) für eine Kamera, ein LIDAR-System oder Sensoren zur Verkehrsüberwachung vorgesehen ist.

## Claims

1. Traffic monitoring device having a housing (1), which has several longitudinal profiles (2, 3, 4, 5) aligned parallel to a height axis (H) and arranged around the circumference and enclosing an inner housing chamber (18), wherein at least one of the longitudinal profiles (2, 3, 4, 5) has an outer wall (6), forming an outer face (8), and having an inner wall (7), forming an inner face (9) facing to the inner housing chamber (18).

2. Traffic monitoring device according to claim 1,
**characterised in**
**that** the inner face (9) of the inner wall (7) of the at least one longitudinal profile (2, 3, 4, 5) has a plane surface facing the inner housing chamber (18).

3. Traffic monitoring device according to one of the preceding claims,
**characterised in**
**that** the at least one longitudinal profile (2, 3, 4, 5) is formed as a hollow profile.

4. Traffic monitoring device according to one of the preceding claims,
**characterised in**
**that** the longitudinal profiles (2, 3, 4, 5) are extruded.

5. Traffic monitoring device according to one of the preceding claims,
**characterised in**
**that** at least one of the longitudinal profiles (2, 4, 5) has at least one cooling channel (13, 19, 20) for guiding a cooling agent.

6. Traffic monitoring device according to claim 5,
**characterised in**
**that** the at least one cooling channel (13, 19, 20) is formed between the inner wall (7) and the outer wall (6) of the at least one longitudinal profile (2, 4, 5).

7. Traffic monitoring device according to claim 6,
**characterised in**
**that** two cooling channels (19, 20), which are separated from each other by a separation wall (21), are formed between the outer wall (6) and the inner wall (7).

8. Traffic monitoring device according to claim 7,
**characterised in**
**that** the separation wall (21) has formations, especially ribs (22, 23), increasing the surface and supporting the heat exchange between the two cooling channels (19, 20).

9. Traffic monitoring device according to claim 8,
**characterised in**
**that** the separation wall (21) is formed as a separate component and is inserted into the longitudinal profile (2, 4) between the outer wall (6) and the inner wall (7).

10. Traffic monitoring device according to one of the preceding claims,
**characterised in**
**that** the housing (1) is protected against the intrusion of foreign bodies, dust and/or liquid.

11. Traffic monitoring device according to one of the preceding claims,
**characterised in**
**that** the longitudinal profiles (2, 3, 4, 5) are detachably connected to each other.

12. Traffic monitoring device according to one of the preceding claims,
**characterised in**
**that** the outer faces (8) of the longitudinal profiles (2, 3, 4, 5) form together one outer face of the housing (1) closed in circumferential direction, wherein the individual outer faces (8) of the longitudinal profiles (2, 3, 4, 5) have a constant transition towards each other.

13. Traffic monitoring device according to one of the preceding claims,
**characterised in**
**that** the longitudinal profiles (2, 3, 4, 5) have outer edges (10, 11) extending parallel to the height axis (H) and against which respectively two adjacent longitudinal profiles (2, 3, 4, 5) abut, wherein seals are provided between the longitudinal edges (10, 11) of two adjacent longitudinal profiles (2, 3, 4, 5), to seal the inner housing chamber (18) to the outside.

14. Traffic monitoring device according to one of the preceding claims,
**characterised in**
**that** one of the longitudinal profiles (5) is connected via hinges (16) to a neighbouring longitudinal profile (2).

15. Traffic monitoring device according to one of the preceding claims,
**characterised in**
**that** the housing (1), formed by the longitudinal profiles (2, 3, 4, 5), is selfsupporting.

16. Traffic monitoring device according to one of the preceding claims,
**characterised in**
**that** electronic devices for monitoring the traffic are accommodated in the inner housing chamber (18) of the housing (1).

17. Traffic monitoring device according to one of the preceding claims,
**characterised in**
**that** at least one of the longitudinal profiles (2, 3, 4, 5) is provided with at least one opening (24, 25) for a camera, a LIDAR-system or sensors for monitoring the traffic.

## Revendications

1. Appareil de surveillance du trafic, avec un boîtier (1), lequel comporte plusieurs profilés longitudinaux (2, 3, 4, 5) orientés à la parallèle par rapport à un axe vertical (H) qui sont distribués sur la périphérie et entourent un espace intérieur (18) de boîtier, au moins l'un des profilés longitudinaux (2, 3, 4, 5) comportant une paroi extérieure (6) qui forme une surface extérieure (8) et une paroi intérieure (7) qui forme une surface intérieure (9) dirigée vers l'espace intérieur (18) du boîtier.

2. Appareil de surveillance du trafic selon la revendication 1,
**caractérisé en ce que**
la surface intérieure (9) de la paroi intérieure (7) de l'au moins un profilé longitudinal (2, 3, 4, 5) comporte une surface plane dirigée vers l'espace intérieur (18) du boîtier.

3. Appareil de surveillance du trafic selon l'une quelconque des revendications précédentes,
**caractérisé en ce que**
l'au moins un profilé longitudinal (2, 3, 4, 5) est un profilé creux.

4. Appareil de surveillance du trafic selon l'une quelconque des revendications précédentes,
**caractérisé en ce que**
les profilés longitudinaux (2, 3, 4, 5) sont boudinés ou extrudés.

5. Appareil de surveillance du trafic selon l'une quelconque des revendications précédentes,
**caractérisé en ce**
**qu'**au moins l'un des profilés longitudinaux (2, 4, 5) comporte au moins un canal de refroidissement (13, 19, 20) pour conduire un agent réfrigérant.

6. Appareil de surveillance du trafic selon la revendication 5,
**caractérisé en ce**
**qu'**entre la paroi intérieure (7) et la paroi extérieure (6) de l'au moins un profilé longitudinal (2, 4, 5) est formé l'au moins un canal de refroidissement (13, 19, 20)

7. Appareil de surveillance du trafic selon la revendication 6,
**caractérisé en ce**
**qu'**entre la paroi extérieure (6) et la paroi intérieure (7) sont formés deux canaux de refroidissement (19, 20) qui sont séparés l'un de l'autre par une paroi de séparation (21).

8. Appareil de surveillance du trafic selon la revendication 7,
**caractérisé en ce que**
la paroi de séparation (21) comporte des structures agrandissant la surface, notamment des nervures (22, 23) qui favorisent l'échange thermique entre les deux canaux de refroidissement (19, 20).

9. Appareil de surveillance du trafic selon la revendication 8,
**caractérisé en ce que**
la paroi de séparation (21) est conçue en tant qu'élément constitutif séparé et est insérée dans le profilé longitudinal (2, 4) entre la paroi extérieure (6) et la paroi intérieure (7).

10. Appareil de surveillance du trafic selon l'une quelconque des revendications précédentes,
**caractérisé en ce que**
le boîtier (1) est protégé contre la pénétration de corps étrangers, de poussière et/ou de liquide.

11. Appareil de surveillance du trafic selon l'une quelconque des revendications précédentes,
**caractérisé en ce que**
les profilés longitudinaux (2, 3, 4, 5) sont reliés les uns aux autres de manière amovible.

12. Appareil de surveillance du trafic selon l'une quelconque des revendications précédentes,
**caractérisé en ce que**
les surfaces extérieures (8) des profilés longitudinaux (2, 3, 4, 5) forment ensemble une surface extérieure fermée en direction périphérique du boîtier (1), les surfaces extérieures (8) individuelles des profilés longitudinaux (2, 3, 4, 5) présentant un passage permanent les uns vers les autres.

13. Appareil de surveillance du trafic selon l'une quelconque des revendications précédentes,
**caractérisé en ce que**
les profilés longitudinaux (2, 3, 4, 5) comportent des arêtes extérieures (10, 11) qui s'étendent à la parallèle de l'axe vertical (H), par lesquelles chaque fois deux profilés longitudinaux (2, 3, 4, 5) voisins se touchent, entre les arêtes longitudinales (10, 11) de deux profilés longitudinaux (2, 3, 4, 5) voisins étant prévus des joints, pour assurer l'étanchéité de l'espace intérieur (18) du boîtier par rapport à l'extérieur.

14. Appareil de surveillance du trafic selon l'une quelconque des revendications précédentes,
**caractérisé en ce que**
l'un (5) des profilés longitudinaux est relié par l'intermédiaire de charnières (16) avec l'un (2) voisin des profilés longitudinaux.

15. Appareil de surveillance du trafic selon l'une quelconque des revendications précédentes,
**caractérisé en ce que**
le boîtier (1) formé par les profilés longitudinaux (2, 3, 4, 5) est autoporteur.

16. Appareil de surveillance du trafic selon l'une quelconque des revendications précédentes,
**caractérisé en ce que**
dans l'espace intérieur (18) du boîtier (1) sont logés des instruments électroniques pour la surveillance du trafic.

17. Appareil de surveillance du trafic selon l'une quelconque des revendications précédentes,
**caractérisé en ce que**
dans au moins l'un des profilés longitudinaux (2, 3, 4, 5), il est prévu au moins une ouverture (24, 25) pour une caméra, un système de lidar ou des capteurs pour la surveillance du trafic.
